**Europäisches Patentamt**

(19) **European Patent Office**

**Office européen des brevets**

(11) Publication number : **0 493 350 B1**

# EUROPEAN PATENT SPECIFICATION

(45) Date of publication of patent specification :
01.03.95 Bulletin 95/09

(51) Int. Cl.[6] : **G01F 1/40,** G01F 1/42,
F24F 11/02

(21) Application number : 91850304.6

(22) Date of filing : 04.12.91

(54) **A device for achieving or measuring a pressure difference.**

(30) Priority : **21.12.90 SE 9004128**

(43) Date of publication of application :
01.07.92 Bulletin 92/27

(45) Publication of the grant of the patent :
01.03.95 Bulletin 95/09

(84) Designated Contracting States :
**DE DK FR GB**

(56) References cited :
**FR-A- 1 119 666**
**GB-A- 904 168**
**GB-A- 972 905**
**US-A- 3 129 587**
**PRODUCT ENGINEERING. vol. 40, no. 22,**
**November 1969, NEW YORK US pages 72 -**
**73;F.D. YEAPLE: 'AVERAGING AIR-FLOW ME-**
**TER REPLACES PITOT TRAVERSE'**

(56) References cited :
**TECHNISCHES MESSEN TM. vol. 55, no. 7-8,**
**1988, MUNCHEN DE pages 268 - 278; K.H.**
**PRESSER: 'DURCHFLUSSMESSUNG MIT**
**PARALLELEN STAULEISTEN IN RECHTECK-**
**KANÄLEN'**

(73) Proprietor : **STRATOS VENTILATION**
**PRODUKT AB**
**S-199 81 Enköping (SE)**

(72) Inventor : **Persson, Berit**
**Boängsgatan 1**
**S-199 42 Enköping (SE)**
Inventor : **Wallin, Christer**
**Sandgatan 33**
**S-199 31 Enköping (SE)**
Inventor : **Danielsson, Per-Olov**
**Vulcanusvägen 54**
**S-199 42 Enköping (SE)**

(74) Representative : **Modin, Jan et al**
**c/o Axel Ehrners Patentbyra AB**
**Box 10316**
**S-100 55 Stockholm (SE)**

## Description

The invention concerns a device for achieving or measuring a pressure difference according to the preamble of claim 1.

In ventilation or air treatment equipments there is often a demand to achieve a pressure difference between different parts of the equipment. In certain cases it is desired to achieve a certain flow through a duct, and in other cases, particularly in systems with a number of consumers, there is a need to assure a satisfactory air supply to all consumers irrespective of the distance from and position with respect to a supply fan or the like.

To achieve a pressure difference of the kind mention above different types of control throttles have been used. The most simple kind of throttle consists of a disc being pivotable on a shaft between an open and a closed position. An exemple of such a device is shown in GB-17059/AD1910. This document concerns a throttle for a flue duct, which throttle furthermore is provided with through holes. Said holes contribute to maintaining a desired minimum flow in the flue duct. US-A-3 129 587 describes a perforated trottle disk for use in flow sensing applications.

Control throttles of a similar kind have also been used in ventilation equipments, particularly in ventilation equipments with a number of supply air devices being supplied with air from a supply fan. Herein the control throttles are placed between the supply air devices and the supply fan.

Due to the interference of the air flow, the known control throttles cause a relatively high sound level. This is particularly noticeable in such ventilation equipments where the other parts of the equipment are relatively silent and where the noise from the control throttle could be perceived as disturbing by people staying in the room.

GB-A-972905 refers to the problem of undesirable noise in air conditioning systems but resolves such problems by constricting the air flow by letting the air pass through diffuser passages and then letting the air impinge against sound absorbent walls.

It is an object of the present invention to achieve a device of the kind mentioned above, wherein said problem is eliminated. This is achieved, according to the invention by a device having the features set forth in the characterizing part of claim 1.

Thus, by forming a throttle disc with smooth rounded edge portions at the up-stream side and flanged edge portions at the down-stream side a considerable reduction of the level of the generated noise is achieved. This is mainly due to the air flow at the up-stream side becoming low turbulent, where the air is redirected by the smooth rounded edge portions adjacent the holes, as well as at the down-stream side, where the air flow will follow the flanged edge portions.

Practical developments of the invention are evident from claims 2-9.

By the features of claims 5 and 6 a particularly suitable flow characteristic is achieved and thereby a particularly noticeable noise reduction.

By the features of claim 7 considerably improved measuring conditions are achieved for measuring air flow, since hereby the measuring point may be placed at the up-stream side of the throttle disc where the pressure is higher, which brings about higher air flow velocity and thereby higher accuracy of measurement at maintained low noise generation.

Claim 8 specified that the invention may be used as a throttle of a per se known kind.

Claims 9 and 10 concern the use of the device in connection with ventilation equipments where it is essential to maintain a low sound level in connection with controllable throttle blades as well as with fixed throttle discs.

The invention will now be described in greater detail with reference to the appended drawings.

Fig. 1 shows a central section through a throttle disc according to the invention;

Fig. 2 shows a part of a ventilation equipment with a controllable throttle blade and a fixed throttle disc according to the invention;

Fig. 3 shows a passage of an air supply duct with a controllable throttle blade according to the invention;

Fig. 4 shows a partly exploded view of a throttle disc being arranged in connection with an air supply device; and

Fig. 5 and 6 show comparisons of sound effect measurements made on a device according to the invention and on previously known devices.

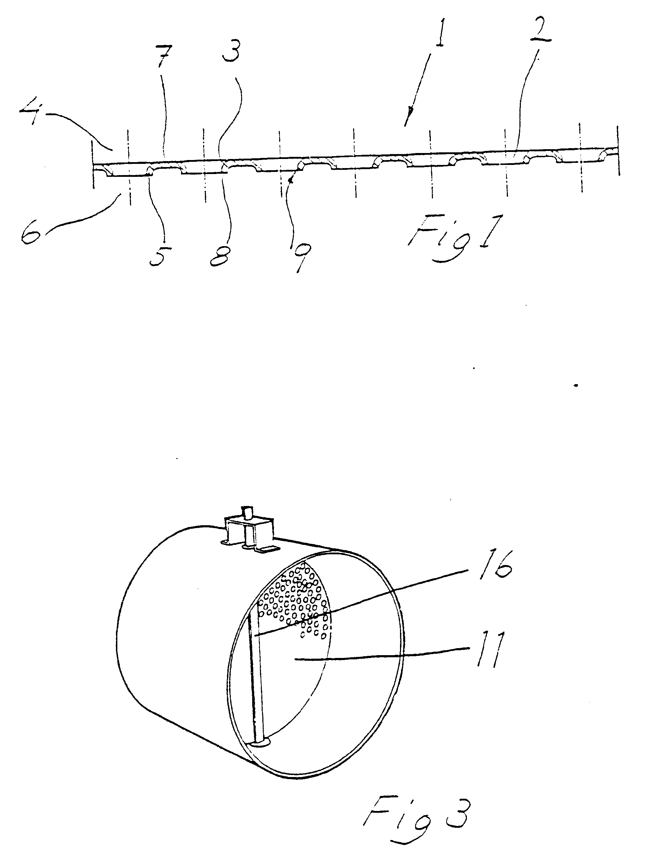

Fig. 1 shows a throttle disc 1 with through holes 2, being provided with smooth rounded edge portions 3 at their up-stream side 4. At their down-stream side the holes are provided with flanged edge portions 5, the lower edge surfaces 8 of which extend a portion below the lower average surface (between the holes) of the throttle disc 1. The distance between the edge surfaces 8 and said lower average surface between the holes is preferably 0.2 - 4 multiplied by the thickness of the throttle disc. The flanged edge portion 5 comprises a

2

well defined lower edge 9 in the area between the envelope surface of the hole 2 and the lower edge surface 8. In the shown embodiment the angle of the edge 9 is approximately 90°, but this angle may also be less than 90°, so that the edge is acute or sharp. At the up-stream side the area 7 between two adjacent holes is preferably convexly curved, so that the air flowing is effectively guided into the holes 2 at the up-stream side. In use the throttle disc according to Fig. 1 is placed in such a way in a ventilation duct or the like, that the air flows through the holes 2 from the up-stream side to the down-stream side. Due to the throttling effect of the throttle disc 1 a fall of pressure is achieved, i.e. there is a pressure difference between the up-stream side 4 and the down-stream side 6.

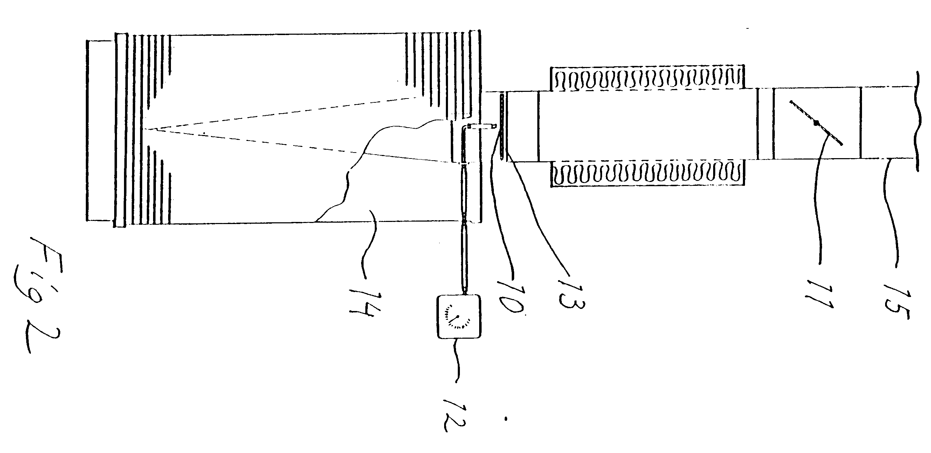

Fig. 2 shows a controllable throttle blade 11 as well as a fixed throttle disc 13 according to the invention, said throttle blade being arranged in an air supply duct 15 and said throttle disc immediately up-stream an air supply device 14. The fixed throttle disc 13 is provided to a measuring point 10 for the connection with a gauging device in its central portion. The gauging device may be connected to a measuring instrument 12 e.g. for facilitating manual adjustment of the air flow, and/or to a control equipment for controlling the controllable throttle blade 11 in response to the signals from the gauging device. If the ventilation equipment includes more than one air supply device, the control equipment may be arranged to receive signals from a gauging device associated with each and every one of the air supply devices. The control equipment thus may be arranged to emit signals to control devices attached to the respective throttle blade 11 in the different air supply ducts 15 for the individual control of the throttle blades and thereby the individual control of the air flow to each and everyone of the air supply devices 14.

Fig. 3 shows a passage of an air supply duct with the controllable throttle blade 11 and a throttle shaft 16 associated therewith. Said shaft may be connected to said control device at the outside of the air supply duct.

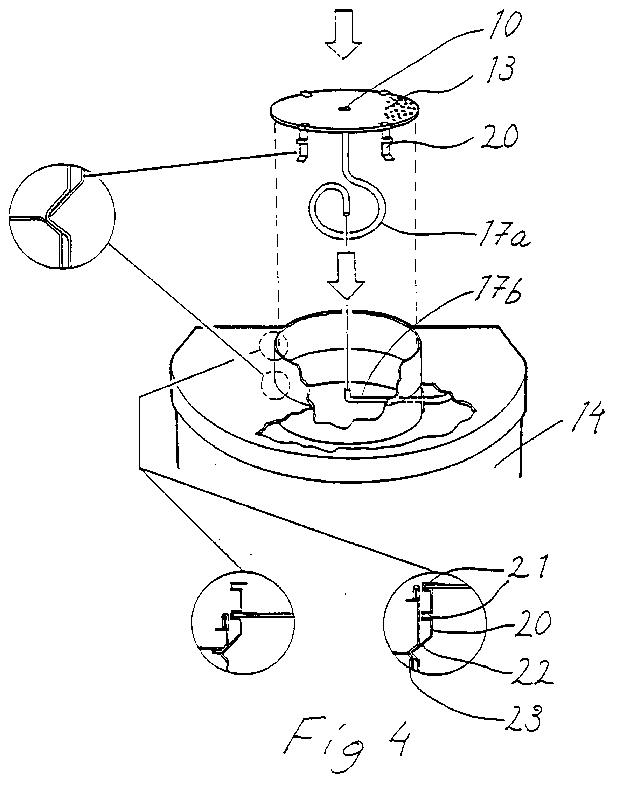

Fig. 4 shows the fixed throttle disc 13 being arranged in the inside of the air supply duct in direct vicinity of the air supply device 14. Resilient fastening elements 20 are mounted around the periphery of the fixed throttle disc 13, and U-shaped clamping parts 21 are arranged to hold the fastening elements 20 onto the throttle disc 12 through clamping action. As will be obvious from the lower detail figures in Fig. 4, the fastening element 20 may be provided with two or more longitudinally disposed clamping parts 21. The fastening elements 20 are further provided with resilient tongues 22 extending radially outside of the throttle disc, said tongues 22 being brought into cooperate with inward recesses 23 in the duct connection of the air supply device 14. By the resilient fastening element 20 being provided with two or more clamping parts, the throttle disc may be mounted at different levels relative to the inlet of the air supply device. It is further obvious from the figure that the fixed throttle disc 13 is provided with said measuring point 10 in its central portion, for connection to the gauging device via a flexible tube 17a and a pipe 17b being mounted in the air supply device 14.

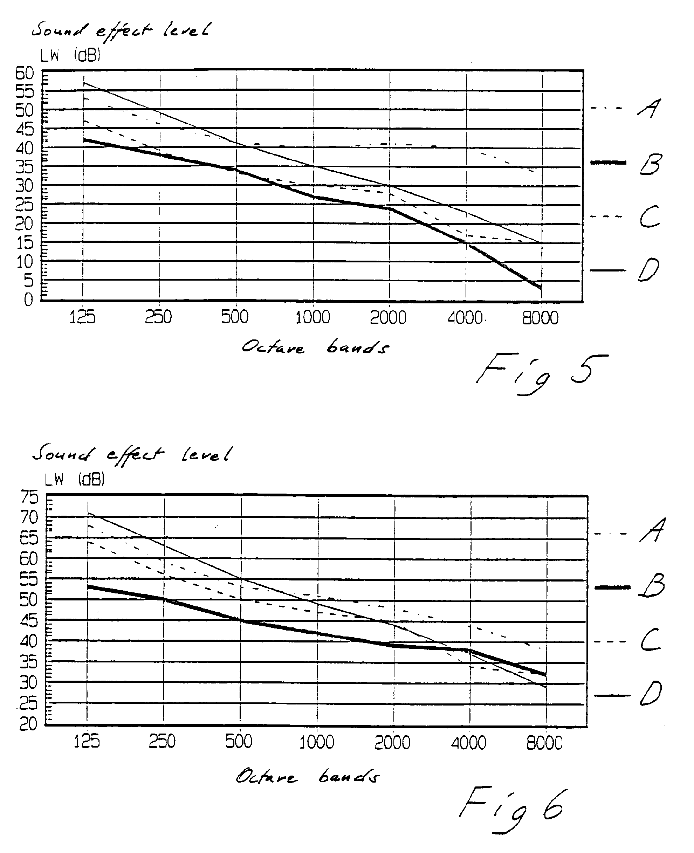

The figures 5 and 6 display the results of two comparative experiments where the sound effect level $L_W$ has been determined for different octave bands between 125 and 8000 Hz. In the diagrams as well as in the table below, A represents the results of a throttle disc without any holes, B the results of a throttle disc according to the invention wherein 34% of the surface of the disc is constituted of through holes, C the results for a throttle of iris type (Halton, PRA 160) and finally D the results of a perforated throttle disc (Stifab, CRP 160). The diagram of fig. 5 relates to measuring at an air flow of 80 l/s and a pressure difference of 36 Pa, while the measurings according to Fig. 6 were carried out at a flow of 160 l/s and a pressure difference of 103 Pa. As will be apparent from both of the diagrams the throttle disc according to the invention provides a considerable lower sound effect level than the other throttle discs in the most octave bands. A logarithmic addition of the sound effect levels of the different octave bands will result in a total sound effect level according to the table below:

Sound effect level $L_{W\,tot}$ dB

| | A | B | C | D |
|---|---|---|---|---|
| $80^l/s.36Pa$ | 54 | 44 | 48 | 58 |
| $160^l/s.103Pa$ | 68 | 56 | 65 | 72 |

The invention may of course be modified with respect to the above described embodiments. Thus, the throttle disc according to the invention may be used to achieve a fall of pressure in connection with various devices for air treatment or ventilation or in different types of ducts, including rectangular ducts or ducts of any other shape. The movable throttle blade according to the invention does not have to be pivotable but may e.g comprise a slidably displaceable throttle, being introduced to a variable extent into the air flow. The mounting of the fixed throttle disc as a fixed throttle may be arranged in different ways known per se. Strips of different kinds may be arranged around the edge of the throttle disc to achieve a sealing effect, for instance against a duct wall.

The throttle may also be used generally for air flow measuring, wherein the fall or pressure over the throttle disc may be measured with conventional equipment.

The device may be modified also in other aspects within the scope of the claims.

## Claims

1. Device for achieving or measuring a pressure difference in a ventilation or air treatment equipment, comprising a throttle disc (1,11,13) with through holes, inserted or insertable in an air flow duct or the like, **characterized** in that the holes (2) of the throttle disc are formed with smooth rounded edge portions (3) at the up-stream side (4) of the throttle disc and with flanged edge portions (5) at the down-stream side (6) of the throttle disc for the purpose of achieving lower sound generation.

2. Device according to claim 1, **characterized** in that the holes (2) form circular free openings with a total area of 10-60%, in particular 20-40%, of the area of the throttle disc.

3. Device according to claim 1 or 2, **characterized** in that the area (7) between two adjacent holes is convexly curved at the up-stream side of the throttle disc.

4. Device according to any one of the claims 1-2, **characterized** in that the lower edge surfaces (8) of the flanged portions (5) are located 0.2 to 4 multiplied by the thickness of the throttle disc below the down-stream side average surface between the holes of the throttle disc.

5. Device according to any one of the claims 1-4, **characterized** in that the flanged portions (5) form well defined lower edges (9).

6. Device according to claim 5, **characterized** in that said lower edges (9) are acute or sharp.

7. Device according to any one of the claims 1-6, **characterized** in that the throttle disc (1,13) preferably in its central portion, is provided with a measuring point (10) for the connection to a gauging device for measuring pressure at the up-stream side.

8. Device according to any one of the claims 1-6, **characterized** in that the throttle disc consists of a throttle blade (11) being controllable through pivoting or sliding displacement.

9. Use of a device according to any one of the claims 1-8 as a throttle or pressure measuring device in a main or branch duct in a ventilation equipment with a central unit comprising an air supply fan and/or a return air fan.

10. Use according to claim 9, said ventilation equipment comprising an air supply fan, supply ducts (15) and a number of air supply devices (14), as a fixed throttle disc (13) and/or as a controllable, disc-shaped throttle blade (11) in the respective air supply duct up-stream each of said air supply devices (14).

## Patentansprüche

1. Vorrichtung zur Erzeugung oder Messung einer Druckdifferenz in einer Belüftungs- oder Luftbehandlungsanlage mit einer Drosselscheibe (1, 11, 13) mit durchgehenden Löchern, die in einen Luftstromkanal oder dergleichen eingesetzt oder einsetzbar ist, **dadurch gekennzeichnet**, daß die Löcher (2) der Drosselscheibe an deren stromaufwärts liegenden Seite (4) mit glatten abgerundeten Kantenabschnitten (3) und an der stromabwärts liegenden Seite (6) der Drosselscheibe mit gebördelten Kantenabschnitten (5) ausgebildet sind, um niedrige Geräuscherzeugung zu erreichen.

2. Vorrichtung nach Anspruch 1, **dadurch gekennzeichnet**, daß die Löcher (2) kreisförmige freie Öffnungen mit einer Gesamtfläche von 10 - 60 %, besonders 20 - 40 % der Fläche der Drosselscheibe bilden.

3. Vorrichtung nach Anspruch 1 oder 2, **dadurch gekennzeichnet,** daß die Fläche (7) zwischen zwei benachbarten Löchern an der stromaufwärts liegenden Seite der Drosselscheibe konvex gebogen ist.

4. Vorrichtung nach einem der Ansprüche 1 bis 2, **dadurch gekennzeichnet,** daß die unteren Kantenflächen (8) der gebördelten Abschnitte (5) unterhalb der Durchschnittsoberfläche zwischen den Löchern der Drosselscheibe an der stromabwärts liegenden Seite in einem Abstand von dieser Fläche, der das 0,2- bis 4-fache der Dicke der Drosselscheibe beträgt, angeordnet sind.

5. Vorrichtung nach einem der Ansprüche 1 bis 4, **dadurch gekennzeichnet,** daß die gebördelten Abschnitte (5) gut definierte untere Kanten (9) bilden.

6. Vorrichtung nach Anspruch 5, **dadurch gekennzeichnet,** daß die Unterkanten (9) spitzwinklig oder scharf sind.

7. Vorrichtung nach einem der Ansprüche 1 bis 6, **dadurch gekennzeichnet,** daß die Drosselscheibe (1, 13) vorzugsweise in ihrem Mittelbereich mit einem Meßpunkt (10) zur Verbindung mit einer Meßvorrichtung zur Messung des an der stromaufwärts liegenden Seite herrschenden Drucks verbunden ist.

8. Vorrichtung nach einem der Ansprüche 1 bis 6, **dadurch gekennzeichnet,** daß die Drosselscheibe aus einer Drosselklappe (11) besteht, die durch Drehung oder gleitende Verschiebung regelbar ist.

9. Verwendung einer Vorrichtung nach einem der Ansprüche 1 bis 8 als Drossel- oder Druckmeßvorrichtung in einer Haupt- oder Zweigleitung in einer Belüftungsanlage mit einer Zentraleinheit mit einem Luftfördergebläse und/oder einem Luftrückführungsgebläse.

10. Verwendung nach Anspruch 9, wobei die Belüftungsanlage ein Luftfördergebläse, Zuleitungskanäle (15) und eine Anzahl von Luftabgabevorrichtungen (14) aufweist und die Vorrichtung als eine feste Drosselscheibe (13) und/oder als eine regelbare scheibenförmige Drosselklappe (11) in der jeweiligen Luftzuleitung stromaufwärts von jeder der Luftabgabevorrichtungen (14) verwendet wird.

**Revendications**

1. Dispositif pour obtenir ou mesurer une chute de pression dans un appareil de traitement d'air ou de ventilation, comprenant un disque d'étrangleur (1,11,13) avec des trous de passage, inséré ou pouvant être inséré dans un conduit de flux d'air ou analogue, caractérisé en ce que les trous (2) du disque d'étrangleur sont formés avec des portions de bords légèrement arrondies (3) du côté en amont (4) du disque d'étrangleur et avec des portions de bords à collerette (5) du côté en aval (6) du disque d'étrangleur dans le but d'obtenir une faible production de bruit.

2. Dispositif selon la revendication 1, caractérisé en ce que les trous (2) forment des ouvertures libres circulaires avec une superficie totale de 10 à 60%, en particulier de 20 à 40%, de la superficie du disque d'étrangleur.

3. Dispositif selon la revendication 1 ou 2, caractérisé en ce que la zone (7) entre deux trous adjacents est convexe du côté en amont du disque d'étrangleur.

4. Dispositif selon l'une quelconque des revendications 1 à 2, caractérisé en ce que les surfaces de bords inférieures (8) des portions à collerette (5) se situent à 0,2 à 4 fois l'épaisseur du disque d'étrangleur sous la surface moyenne du côté en aval entre les trous du disque d'étrangleur.

5. Dispositif selon l'une quelconque des revendications 1 à 4, caractérisé en ce que les portions à collerette (5) forment des bords inférieurs bien définis (9).

6. Dispositif selon la revendication 5, caractérisé en ce que lesdits bords inférieurs (9) sont saillants ou aigus.

7. Dispositif selon l'une quelconque des revendications 1 à 6, caractérisé en ce que le disque d'étrangleur (1, 13), de préférence dans sa portion centrale, est doté d'un point de mesure (10) pour connexion avec un dispositif de jaugeage pour la mesure de pression au côté en amont.

8. Dispositif selon l'une quelconque des revendications 1 à 6, caractérisé en ce que le disque d'étrangleur consiste en une lame d'étrangleur (11) pouvant être réglée par pivotement ou coulissement.

9. Utilisation d'un dispositif selon l'une quelconque des revendications 1 à 8 en tant qu'étrangleur ou dispositif de mesure de pression dans un conduit principal ou secondaire dans un appareil de ventilation avec une unité centrale comprenant un ventilateur d'alimentation en air et/ou un ventilateur de retour d'air.

10. Utilisation selon la revendication 9, ledit appareil de ventilation comprenant un ventilateur d'alimentation en air, des conduits d'alimentation (15) et un certain nombre de dispositifs d'alimentation en air (14), en tant que disque d'étrangleur fixe (13) et/ou en tant que lame d'étrangleur en forme de disque, réglable (11) dans le conduit d'alimentation en air respectif en amont de chacun desdits dispositifs d'alimentation en air (14).

Fig 1

Fig 3

Fig 2

Fig 4

Sound effect level

LW (dB)

Octave bands

Fig 5

Sound effect level

LW (dB)

Octave bands

Fig 6